# FASCICULE DE BREVET EUROPEEN

(11) **EP 2 734 708 B1**
(45) Date de publication et mention de la délivrance du brevet: **05.04.2017**
(21) Numéro de dépôt: 12743522.0
(22) Date de dépôt: 18.07.2012
(51) Int. Cl.: F01D 9/04, F01D 25/24

(54) **ROUE FIXE DE TURBOMACHINE ET TURBINE OU COMPRESSEUR COMPORTANT UNE TELLE ROUE FIXE**
STATISCHES RAD EINER TURBOMASCHINE SOWIE TURBINE ODER VERDICHTER BESTÜCKT MIT SOLCHEM RAD
STATIC RING FOR A TURBOMACHINE AND TURBINE OR COMPRESSOR COMPRISING SUCH A RING

(30) Priorité: 22.07.2011 FR 1156710
(43) Date de publication de la demande: 28.05.2014
(73) Titulaire: Snecma, 75015 Paris (FR); HERAKLES, 33185 Le Haillan (FR)
(72) Inventeur: BELMONTE, Olivier, 77550 Moissy-Cramayel Cedex (FR); BEAUJARD, Antoine, Jean-Philippe, 77550 Moissy-Cramayel Cedex (FR)
(74) Mandataire: Delumeau, François Guy
(86) Numéro de dépôt international: PCT/FR2012/051698
(87) Numéro de publication internationale: WO 2013/014367

(56) Documents cités:
- EP-A2- 1 013 885
- US-A1- 2010 068 034
- US-A1- 2011 008 156

## Description

### Arrière-plan de l'invention

L'invention concerne une roue fixe de turbomachine, notamment un turbomoteur aéronautique ou une turbine industrielle, une telle roue fixe formant distributeur de turbine ou redresseur de compresseur.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique (CMC). En effet, ces matériaux présentent des propriétés thermostructurales remarquables, c'est-à-dire des propriétés mécaniques qui les rendent aptes à constituer des éléments de structure et la capacité à conserver ces propriétés mécaniques à des températures élevées.

De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de turbomachines à plate-forme et talon intégrés. L'utilisation de matériau CMC spécifiquement pour des distributeurs de turbine a aussi été proposée, notamment dans le document WO 2010/146288.

Les distributeurs de turbine métalliques traditionnels sont habituellement formés par assemblage d'un nombre limité de secteurs obtenus par fonderie et comprenant chacun un assez grand nombre de pales. La forme complexe de tels secteurs rend difficile leur réalisation en une seule pièce en matériau CMC. Pour obtenir un distributeur de turbine en matériau CMC, on est donc plutôt conduit à envisager un assemblage d'un nombre relativement élevé d'éléments individuels, ou aubes, chaque aube ne comprenant qu'un faible nombre de pales, voire une seule pale. Se pose alors le problème de la réalisation, de façon simple et économique, de l'assemblage des aubes de distributeur avec une étanchéité satisfaisante, notamment pour éviter les fuites entre la veine d'écoulement de gaz dans la turbine et l'extérieur du distributeur.

Le document US 20110008156 divulgue un exemple de distributeur de turbine métallique muni de pattes d'accrochage avec des revêtements en matériau CMC. Un problème similaire se pose pour la réalisation de redresseurs de compresseur de turbomachine utilisant éventuellement des matériaux CMC dans les étages de compresseur aval exposés aux températures les plus élevées ou utilisant des matériaux composites à matrice organique (CMO) au moins dans les étages de compresseur amont.

### Objet et résumé de l'invention

L'invention a pour but d'apporter une solution à ce problème et propose à cet effet une roue fixe de turbomachine comportant une pluralité d'aubes en matériau composite, chaque aube comprenant une plate-forme intérieure, une plate-forme extérieure présentant du côté extérieur des pattes d'accrochage et au moins une pale s'étendant entre les plates-formes intérieure et extérieure et solidaire de celles-ci, l'aube et la plate-forme extérieure avec les pattes d'accrochage formant une seule pièce en matériau composite à matrice céramique, la roue fixe comportant une couronne métallique de montage sur laquelle sont engagées les pattes d'accrochage des aubes, la couronne métallique supportant l'ensemble des aubes, s'étendant de façon continue le long de plates-formes extérieures de plusieurs aubes adjacentes, et formant une pièce de montage distincte entre les aubes et un carter.

Ainsi, la couronne métallique de montage assure à la fois une fonction d'intégration des aubes de la roue fixe et une fonction d'étanchéité en s'étendant le long des plates-formes extérieures d'aubes.

De préférence, la couronne métallique est formée par une tôle et peut ainsi présenter une capacité de déformation pour compenser des variations dimensionnelles différentielles d'origine thermique.

Avantageusement, la couronne métallique présente des surfaces d'appui tronconiques contribuant au maintien radial et axial des aubes tout en permettant également de s'accommoder plus facilement de variations dimensionnelles différentielles.

Selon un mode de réalisation, la couronne métallique a une section sensiblement en forme de Ω s'ouvrant vers l'extérieur, ayant une partie de base et des ailes se terminant par des parties d'extrémité formant crochets pour le montage avec un carter, et des surfaces d'appui tronconiques en contact avec les pattes d'accrochage des aubes sont situées sur les faces externes des ailes de la couronne.

Avantageusement, la plate-forme extérieure de chaque aube présente une nervure faisant saillie du côté extérieur et venant en butée radiale contre une partie de surface de la couronne métallique, ce qui contribue à s'opposer à un basculement de l'aube. La nervure assure aussi une fonction de raidisseur. Elle peut se situer dans le prolongement de la pale de l'aube lorsque celle-ci ne comprend qu'une seule pale.

De préférence, la couronne métallique est en une seule pièce et présente une fenêtre d'insertion des aubes. Dans ce cas, la roue fixe peut comprendre en outre au moins un verrou de blocage en position d'une aube montée au niveau de la fenêtre d'insertion.

Pour améliorer encore l'étanchéité, des plaquettes d'étanchéité peuvent être disposées sur les faces extérieures des plates-formes extérieures des aubes, chaque plaquette couvrant au moins partiellement une jonction entre les plates-formes extérieures de deux aubes adjacentes.

L'invention a aussi pour objet une turbine de turbomachine comprenant au moins une roue fixe que définie ci-avant, ainsi qu'un compresseur de turbomachine selon la revendication 10. Avantageusement, lorsque la turbomachine comprend en outre une roue mobile voisine de la roue fixe et comportant des aubes munies à leurs extrémités de léchettes en regard d'un matériau abradable supporté par un anneau, une couronne métallique additionnelle est montée entre l'anneau support d'abradable et les plates-formes extérieures des aubes de la roue fixe, en appui sur celles-ci.

Cette couronne métallique additionnelle contribue à améliorer l'étanchéité. Elle peut être sous forme d'une tôle. De préférence, la couronne métallique additionnelle est en une seule pièce.

### Brève description des dessins

L'invention sera mieux comprise à la lecture de la description faite ci-après, à titre indicatif mais non limitatif, en référence aux dessins annexés, sur lesquels :
- la figure 1 est une vue en coupe partielle d'une turbine basse-pression de turbomachine incorporant un distributeur selon un mode de réalisation de l'invention ;
- la figure 2 est une vue en perspective d'une aube du distributeur de turbine de la figure 1 ;
- la figure 3 est une vue partielle en perspective d'une couronne métallique de montage du distributeur de la figure 1 ;
- la figure 4 est une vue en perspective d'un verrou utilisé pour le montage du distributeur de la figure 1 ;
- les figures 5 à 11 sont des vues partielles en coupe et/ou en perspective montrant des étapes successives de l'assemblage du distributeur de turbine de la figure 1 ; et
- la figure 12 est une vue partielle en perspective et en partie arrachée montrant une variante de réalisation d'un distributeur de turbine selon l'invention.

### Description détaillée de modes de réalisation

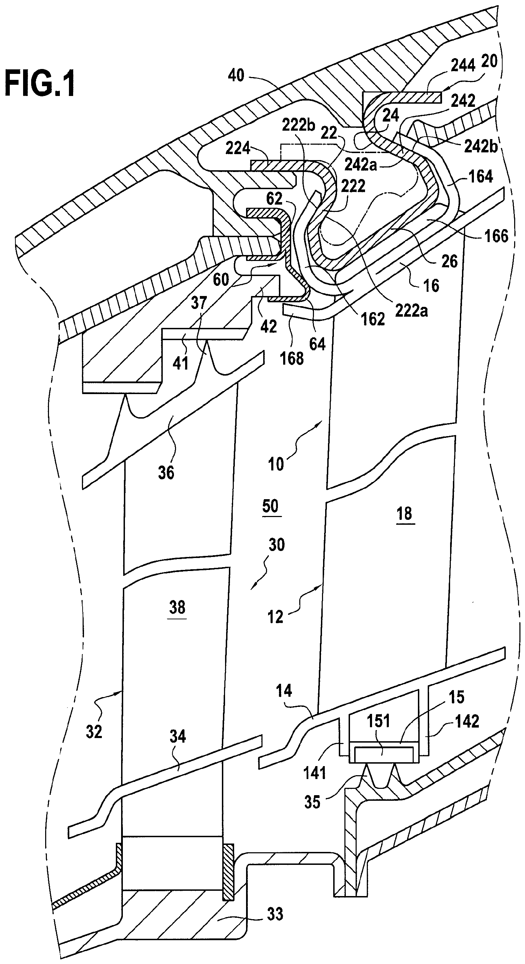

Une turbine basse-pression multi-étages de turbomachine telle que montrée partiellement sur la figure 1 comprend une pluralité de roues fixes formant distributeurs 10 qui alternent avec des roues mobiles 30 et qui sont montées dans un carter de turbine 40.

Chaque roue mobile 30 comprend une pluralité d'aubes 32 ayant une plate-forme intérieure 34, une plate-forme extérieure ou talon 36 et une pale 38 s'étendant entre les plates-formes 34 et 36. Sous la plate-forme 34, l'aube se prolonge par un pied engagé dans un logement d'un disque 33. Du côté extérieur, le talon 36 supporte des léchettes 37 en regard d'un matériau abradable 41 porté par un anneau sectorisé 42.

Les aubes 32 peuvent être des aubes métalliques traditionnelles ou des aubes en matériau CMC obtenues par exemple comme décrit dans les documents précités WO 2010/061140, WO 2010/116066 ou FR 2 953 885.

Conformément à l'invention, au moins l'un des distributeurs, par exemple le distributeur 10 de la figure 1, est formé par une pluralité d'aubes de distributeur 12 en matériau CMC qui sont assemblées à l'aide d'une couronne de montage 20.

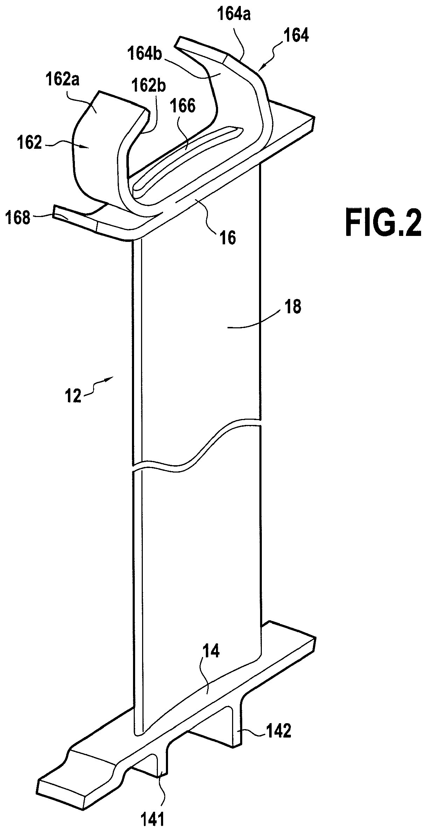

Dans l'exemple illustré (figures 1 et 2), chaque aube 12 est une aube mono-pale avec une plate-forme intérieure 14, une plate-forme extérieure 16 et une pale 18 s'étendant entre les plates-formes 14 et 16 et solidaire de celles-ci.

Les faces extérieures des plates-formes 14, 34 et les faces intérieures des plates-formes 16 et talons 36 délimitent la veine 50 d'écoulement de gaz dans la turbine.

Sur leurs faces internes, les plates-formes intérieures 14 des aubes 12 présentent des nervures 141, 142 de montage d'un anneau 15 support de matériau abradable 151 en regard de léchettes 35 portées par le disque 33. L'anneau de matériau abradable peut par exemple être constitué par une bande de matériau en nid d'abeilles enroulée sur elle-même et positionnée entre les nervures 141 et 142.

Les léchettes 35 coopèrent avec le matériau abradable 151 pour assurer l'étanchéité du côté intérieur tandis que les léchettes 37 coopèrent avec le matériau abradable 41 pour assurer l'étanchéité aux sommets des aubes 32.

Du côté extérieur, chaque plate-forme extérieure 16 d'une aube 12 présente des pattes d'accrochage 162, 164 qui font saillie vers l'extérieur respectivement du côté amont et du côté aval. Les termes amont et aval sont utilisés dans la présente description en référence au sens d'écoulement de gaz dans la veine 50. La patte d'accrochage amont 162 a une partie d'extrémité 162a repliée vers l'aval présentant une partie de surface d'appui interne tronconique 162b. La patte d'accrochage aval 164 a une partie d'extrémité 164a repliée vers l'amont présentant une partie de surface d'appui interne tronconique 164b.

Egalement du côté extérieur, chaque plate-forme extérieure 16 d'une aube 12 présente une nervure 166 qui s'étend dans la direction longitudinale (axiale) de la plate-forme 16 et constitue un raidisseur de celle-ci. La nervure 166 peut être formée par un prolongement de la pale 18.

Chaque aube 12 est réalisée en une seule pièce en matériau CMC. On pourra utiliser à cet effet un procédé tel que décrit dans le document WO 2010/146288 ou dans le document WO 2011/080443, les contenus de ces documents étant incorporés ici par voie de référence. Brièvement, une ébauche fibreuse est réalisée par tissage multi-couches ou tridimensionnel à partir de fils en fibres de céramique, par exemple de carbure de silicium SiC ou en fibres de carbone. L'ébauche fibreuse est mise en forme pour obtenir une préforme fibreuse ayant une forme voisine de celle de l'aube à réaliser. La préforme est consolidée dans sa forme par exemple par imprégnation par une résine précurseur de carbone ou de céramique, puis réticulation et pyrolyse de la résine, la préforme étant maintenue dans un outillage. La préforme consolidée retirée de l'outillage est densifiée par une matrice céramique par exemple par infiltration chimique en phase gazeuse ou CVI ("Chemical Vapour Infiltration"). La matrice peut par exemple être en SiC ou être une matrice auto-cicatrisante comprenant des phases de matrice en carbure de bore B₄C ou en système tertiaire Si-B-C. La réalisation de telles matrices auto-cicatrisantes est notamment décrite dans les documents US 5 246 756 et US 5 965 266.

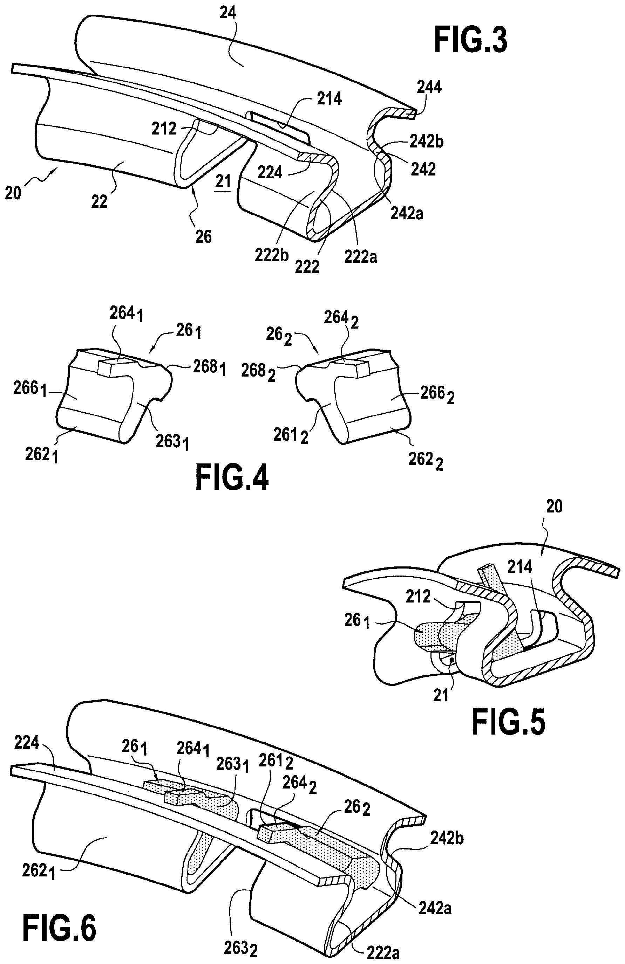

L'assemblage des aubes 12 pour former le distributeur de turbine 10 axisymétrique est réalisé à l'aide d'une couronne de montage annulaire 20 (figures 1, 3). La couronne 20 est avantageusement formée par une tôle. Le matériau constitutif de la couronne 20 est en métal ayant une bonne tenue aux températures rencontrées en service, par exemple un métal ou alliage métallique couramment utilisé dans les enceintes de turbine BP tel qu'un alliage à base principalement de nickel et de chrome connu sous la dénomination Inconel® ou Waspaloy®.

Dans l'exemple illustré, la couronne 20 a une section sensiblement en forme de Ω ouvert vers l'extérieur. Elle comprend une partie de base 26 prolongée du côté amont et du côté aval par des ailes respectives amont et aval 22, 24 à section sensiblement en forme de S. Sur leurs faces internes, les ailes 22, 24 présentent dans leurs parties médianes respectives 222, 242, des parties de surface formant des portées tronconiques 222a, 242a. Sur leurs faces externes, les ailes 22, 24 présentent également dans leurs parties médianes respectives 222, 242, des parties de surface tronconiques formant des surfaces d'appui 222b, 242b. Les ailes 22, 24 se terminent par des parties d'extrémité repliées respectivement vers l'amont et vers l'aval pour former des crochets amont et aval, respectivement 224, 244 pour le montage dans le carter de turbine 40.

De préférence, la couronne 20 forme un anneau en une seule pièce et présente une ouverture ou fenêtre 21 pour l'insertion des aubes 12 par leurs pattes d'accrochage 162, 164. La largeur de la fenêtre 21 est donc égale ou légèrement supérieure à la dimension des pattes d'accrochage 162, 164 en direction circonférentielle. Dans l'exemple illustré, la fenêtre 21 est formée par un évidement s'étendant entre une première extrémité 212 située sensiblement au niveau du raccordement entre la partie médiane 222 et le crochet 224 et une deuxième extrémité 214 située sensiblement au niveau du raccordement entre la base 26 et la partie médiane 242. Le montage des aubes 12 au moyen de la couronne 20 sera maintenant décrit en référence aux figures 4 à 11.

Une première étape consiste à insérer dans la couronne 20 un moyen de verrouillage permettant, après mise en place de la dernière aube 12 au niveau de la fenêtre d'insertion 21, d'immobiliser cette aube en position.

Dans l'exemple illustré, ce moyen de verrouillage est formé de deux verrous 26₁, 26₂ tels qu'illustrés par la figure 4. Les verrous 26₁, 26₂ sont en un matériau métallique similaire, de préférence identique à celui de la couronne 20.

Les verrous 26₁, 26₂ présentent des corps de verrou similaires respectifs 262₁, 262₂ sous forme de secteurs annulaires. Au voisinage de l'une de ses extrémités circonférentielles 263₁, le corps de verrou 262₁ est prolongé à son sommet par un ergot de verrouillage 264₁. De façon similaire, au voisinage de l'une de ses extrémités circonférentielles 261₂, le corps de verrou 262₂ est prolongé à son sommet par un ergot de verrouillage 264₂. Sur ses faces circonférentielles opposées, le corps de verrou 262₁ présente des parties de surface formant des portées tronconiques 266₁, 268₁. De même, sur ses faces circonférentielles opposées, le corps de verrou 262₂ présente des parties de surface formant des portées tronconiques 266₂, 268₂.

Les corps de verrou 262₁, 262₂ ont des dimensions et profils adaptés pour pouvoir être engagés dans la couronne 20 en passant à travers la fenêtre 21, pour pouvoir être insérés dans la partie de la couronne 20 située entre la base 26 et les parties médianes des ailes 22, 24, et pour pouvoir prendre une position dans laquelle les portées tronconiques 266₁ et 266₂ sont au contact de la portée tronconique 222a, les portées tronconiques 268₁ et 268₂ sont au contact de la portée tronconique 242a et les ergots de verrouillage 264₁, 264₂ s'appuient sur la face externe du crochet amont 224. La figure 5 montre l'engagement du verrou 26₁ dans la fenêtre 21 de la couronne 20. La figure 6 montre les verrous 26₁, 26₂ mis en place dans la couronne 20, de part et d'autre de la fenêtre 21, les faces d'extrémité 263₁, 261₂ au voisinage desquelles se situent les ergots de verrouillage 264₁, 264₂ se faisant face.

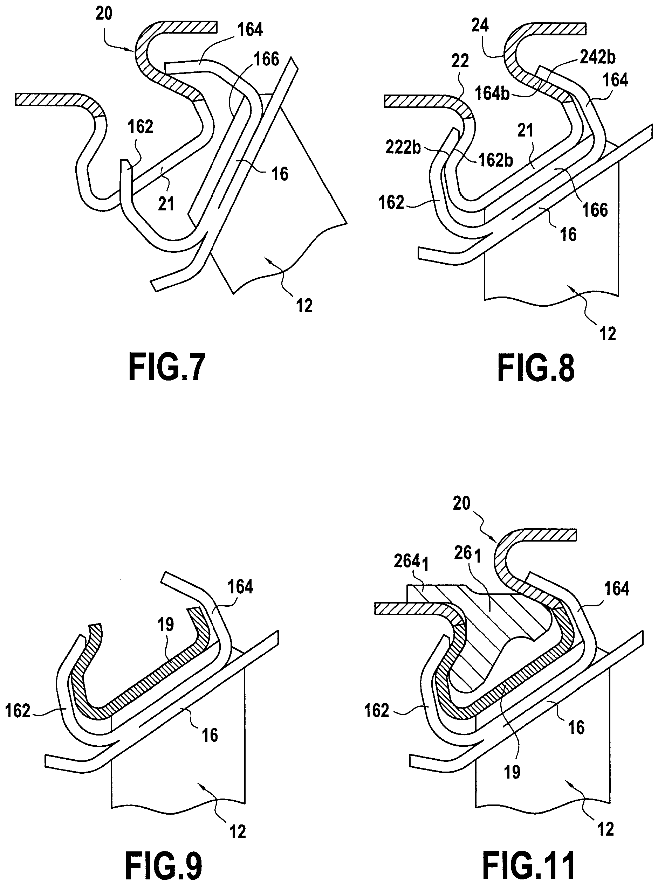

Une étape suivante de constitution du distributeur consiste à engager successivement les aubes 12 sur la couronne 20. Comme le montrent en coupe les figures 7 et 8, chaque aube 12 est engagée avec introduction de la patte d'accrochage amont 162 dans la fenêtre 21 puis basculement pour faire coulisser l'aube le long de la couronne 20. Les géométries des plates-formes extérieures 16 des aubes 12 et de la couronne 20 sont adaptées pour que la mise en place d'une aube 12 se fasse avec appui mutuel entre les surfaces d'appui tronconiques 162b et 222b, d'une part, et entre les surfaces d'appui tronconiques 164b et 242b, d'autre part, tandis que la nervure de raidissement 166 vient en butée sur la base 26 de la couronne 20 (figure 1). Les surfaces d'appui tronconiques 222b et 242b de la couronne 20 contribuent au maintien radial et axial des aubes 12. La nervure 166 et la base de la couronne 20 présentent avantageusement des surfaces de contact sensiblement planes, l'appui radial de la nervure 166 sur la base 26 s'opposant à un basculement de l'aube 12.

Pour le montage de la dernière aube 12 au niveau de la fenêtre d'insertion 21, cette aube est munie d'un opercule 19 destiné à reconstituer la couronne 20 dans la partie correspondant à la fenêtre 21 (figure 9). L'opercule 19 est en un matériau métallique de préférence identique à celui de la couronne 20.

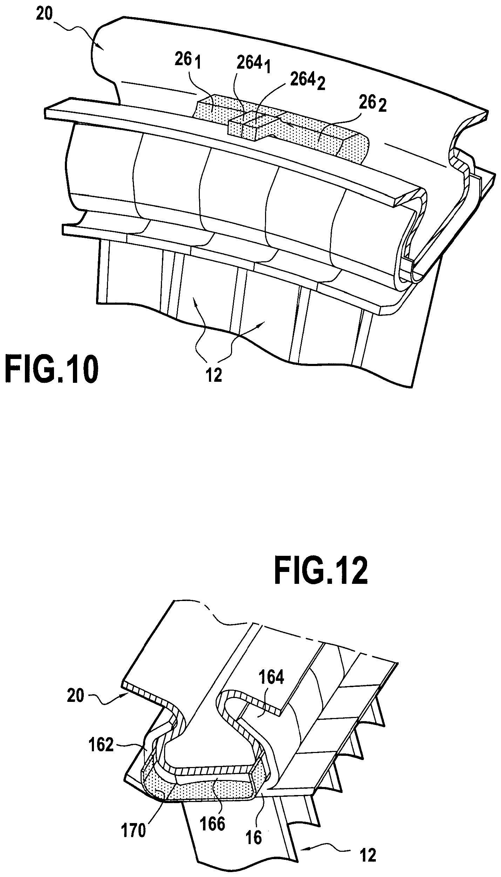

Après mise en place de la dernière aube, les verrous 26₁ et 26₂ sont rapprochés l'un de l'autre comme le montre la figure 10. Les ergots de verrouillage 264₁, 264₂ se trouvent à proximité l'un de l'autre au niveau de la fenêtre 21, immobilisant les verrous en basculement, de sorte que la dernière aube se trouve bloquée dans sa position comme le montre en coupe la figure 11.

Le distributeur ainsi constitué est mis en place dans le carter de turbine au moyen des crochets 224, 244 de façon similaire à un distributeur métallique traditionnel.

La couronne 20 a pour fonction non seulement de permettre le montage et l'assemblage des aubes 12 mais aussi de limiter les fuites du côté extérieur de la veine 50 au niveau du distributeur, aucun moyen d'étanchéité particulier n'étant dans cet exemple prévu entre les plates-formes extérieures jointives d'aubes 12 adjacentes.

A l'amont du distributeur 10, les secteurs de l'anneau 42 support du matériau abradable 41 peuvent être maintenus par des becquets 168 que forment les extrémités amont des plates-formes extérieures 16 des aubes 12. De préférence toutefois, le maintien des secteurs de l'anneau 42 est assuré par une couronne annulaire 60 (figure 1) réalisée par exemple sous forme d'une tôle. La couronne 60 peut être en un matériau métallique similaire ou identique à celui de la couronne 20.

La couronne 60 forme de préférence un anneau complet. Dans l'exemple illustré, elle présente une partie 62 en forme de U pour son accrochage au carter de turbine. La partie 62 est prolongée vers l'intérieur par une partie 64 à section sensiblement en forme de C formant crochet de maintien des secteurs de l'anneau 42, les parties 62 et 64 s'ouvrant vers l'amont.

Sur son côté aval, la couronne 60 est en appui axial sur les faces amont des pattes d'accrochage amont 162 des aubes 12, au niveau de la base de la partie 62 à section en U et/ou au niveau de la partie 64. Les becquets 168 peuvent assurer le maintien radial de la partie 64 par appui sur celle-ci.

Outre le support des secteurs de l'anneau 42, la couronne 60 contribue à améliorer l'étanchéité du côté extérieur de la veine 50.

Une amélioration supplémentaire de l'étanchéité peut être apportée en disposant des plaquettes d'étanchéité 170 sur les faces extérieures des plates-formes extérieures 16 des aubes 12, comme le montre la figure 12. Les plaquettes 170 sont par exemple sous forme de tôles à section en U dont les ailes s'appuient sur les parties intérieures des pattes d'accrochage 162, 164. Les plaquettes 170 sont en un matériau métallique similaire et de préférence identique à celui de la couronne 20. Chaque plaquette recouvre la jonction entre deux plates-formes extérieures 16 en s'étendant par exemple entre les nervures de raidissement 166 de deux aubes voisines. Les plaquettes 170 sont mises en place au fur et à mesure du montage des aubes 12.

On notera que la réalisation de la couronne 20 sous forme d'une tôle métallique ayant de ce fait une certaine capacité de déformation ainsi que l'appui mutuel entre la couronne 20 et les aubes 12 sur des surfaces tronconiques permettent de s'accommoder de dilatations différentielles entre le matériau CMC des aubes 12 et le matériau métallique de la couronne 20, d'autant que les surfaces d'appui sont situées du côté extérieur des plates-formes 16, donc non directement exposées au flux circulant dans la veine 50.

Dans ce qui précède, on a envisagé la réalisation d'un distributeur de turbine à partir d'aubes mono-pales. Bien entendu, l'invention peut aussi être mise en oeuvre avec des aubes comprenant plus d'une pale s'étendant entre une plate-forme intérieure unique et une plate-forme extérieure unique, par exemple des aubes bi-pales ou tripales.

En outre, la réalisation de la couronne de montage 20 en plusieurs secteurs, par exemple 2, 3 ou 4 secteurs, peut être envisagée, chaque secteur englobant plusieurs aubes adjacentes. Le montage des aubes dans les secteurs de couronne peut alors être simplifié, ne nécessitant pas de fenêtre d'insertion, d'opercule de fermeture ou de verrous de blocage, l'assemblage du distributeur complet étant réalisé lors de son montage dans le carter de turbine. Des plaquettes d'étanchéité sont alors avantageusement disposées entre secteurs de couronne métallique adjacents. De façon similaire, la couronne éventuelle 60 peut aussi être réalisée en plusieurs secteurs

Bien que l'on ait décrit une couronne présentant en section une forme sensiblement en Q, d'autres formes peuvent être envisagées dès lors que la couronne présente des parties tronconiques permettant le maintien radial et axial des aubes et des parties permettant l'accrochage au carter de turbine.

La description détaillée ci-dessus vise une roue fixe de turbomachine formant distributeur de turbine. L'invention est également applicable à une roue fixe de turbomachine formant redresseur de compresseur. Dans ce dernier cas, la roue fixe de redresseur de compresseur comprend une pluralité d'aubes comprenant chacune une plate-forme intérieure, une plate-forme extérieure présentant du côté extérieur des pattes d'accrochage et au moins une pale s'étendant entre les plates-formes intérieure et extérieure, l'aube avec la plate-forme extérieure et les pattes d'accrochage formant une seule pièce en matériau composite. Les aubes du redresseur de compresseur sont assemblées et supportées au moyen d'une couronne métallique de montage qui s'étend de façon continue le long de plates-formes extérieures de plusieurs aubes adjacentes et qui forme une pièce de montage distincte entre les aubes et un carter de compresseur, l'assemblage des aubes au moyen de la couronne métallique étant réalisée comme décrit plus haut pour une roue fixe formant distributeur de turbine.

Dans le ou les étages amont du compresseur où les températures rencontrées en service sont les moins élevées au niveau du compresseur, le matériau composite des aubes du redresseur de compresseur peut être un matériau composite à matrice organique (CMO) ayant un renfort en fibres, par exemple en carbone, verre, aramide ou céramique, densifié par une matrice polymère par exemple époxide, bismaléimide ou polyimide. Dans le ou les étages aval du compresseur, le matériau composite des aubes du redresseur de compresseur peut être un matériau CMC.

## Revendications

1. Roue fixe de turbomachine comportant :
- une pluralité d'aubes (12) comprenant chacune une plate-forme intérieure, (14) une plate-forme extérieure (16) présentant du côté extérieur des pattes d'accrochage (162, 164) et au moins une pale (12) s'étendant entre les plates-formes intérieure et extérieure, et
- une couronne (20) métallique de montage sur laquelle sont engagées les pattes d'accrochage des aubes, la couronne métallique supportant l'ensemble des aubes, s'étendant de façon continue le long de plates-formes extérieures de plusieurs aubes adjacentes, et formant une pièce de montage distincte entre les aubes et un carter (40), **caractérisé en ce que** l'aube et la plate-forme avec les pattes d'accrochage forment une seule pièce en matériau composite à matrice céramique.

2. Roue fixe selon la revendication 1, dans laquelle la couronne (20) métallique est formée par une tôle.

3. Roue fixe selon la revendication 1 ou la revendication 2, dans laquelle la couronne (20) métallique présente des surfaces d'appui tronconiques (162b, 164b) contribuant au maintien radial et axial des aubes.

4. Roue fixe selon l'une quelconque des revendications 1 à 3, dans laquelle la couronne (20) métallique a une section sensiblement en forme de Ω s'ouvrant vers l'extérieur, ayant une partie de base (26) et des ailes (22, 24) se terminant par des parties d'extrémité formant crochets (224, 244) pour le montage avec un carter, et des surfaces d'appui tronconiques en contact avec les pattes d'accrochage des aubes sont situées sur les faces externes des ailes de la couronne.

5. Roue fixe selon l'une quelconque des revendications 1 à 4, dans laquelle la plate-forme extérieure de chaque aube présente une nervure (166) faisant saillie du côté extérieur et venant en butée radiale contre une partie de surface de la couronne métallique.

6. Roue fixe selon l'une quelconque des revendications 1 à 5, dans laquelle la couronne métallique est en une seule pièce et présente une fenêtre (21) d'insertion des aubes.

7. Roue fixe selon la revendication 6, comprenant en outre au moins un verrou de blocage (26_{1.2}) en position d'une aube montée au niveau de la fenêtre d'insertion.

8. Roue fixe selon l'une quelconque des revendications 1 à 7, dans laquelle des plaquettes d'étanchéité (170) sont disposées sur les faces extérieures des plates-formes extérieures des aubes, chaque plaquette couvrant au moins partiellement une jonction entre les plates-formes extérieures de deux aubes adjacentes.

9. Turbine de turbomachine comprenant au moins une roue fixe formant distributeur de turbine selon l'une quelconque des revendications 1 à 8, la turbine comprenant une roue mobile voisine du distributeur et comportant des aubes munies à leurs extrémités de léchettes en regard d'un matériau abradable supporté par un anneau, une couronne métallique additionnelle étant montée entre l'anneau support d'abradable et les plates-formes extérieures des aubes du distributeur, en appui sur celles-ci.

10. Compresseur de turbomachine comprenant au moins une roue fixe formant redresseur de compresseur et comportant :
- une pluralité d'aubes comprenant chacune une plate-forme intérieure, une plate-forme extérieure présentant du côté extérieur des pattes d'accrochage et au moins une pale s'étendant entre les plates-formes intérieure et extérieure, et
- une couronne métallique de montage sur laquelle sont engagées les pattes d'accrochage des aubes, la couronne métallique supportant l'ensemble des aubes, s'étendant de façon continue le long de plates-formes extérieures de plusieurs aubes adjacentes, et formant une pièce de montage distincte entre les aubes et un carter,
le compresseur comprenant une roue mobile voisine du redresseur et comportant des aubes munies à leurs extrémités de léchettes en regard d'un matériau abradable supporté par un anneau, une couronne métallique additionnelle étant montée entre l'anneau support d'abradable et les plates-formes extérieures des aubes du redresseur, en appui sur celles-ci, **caractérisé en ce que** l'aube et la plate-forme extérieure avec les pattes d'accrochage forment une seule pièce en matériau composite à matrice céramique ou organique.

11. Roue fixe selon la revendication 10, dans laquelle la couronne métallique est formée par une tôle.

12. Roue fixe selon la revendication 10 ou la revendication 11, dans laquelle la couronne métallique présente des surfaces d'appui tronconiques contribuant au maintien radial et axial des aubes.

13. Roue fixe selon l'une quelconque des revendications 10 à 12, dans laquelle la couronne métallique a une section sensiblement en forme de Ω s'ouvrant vers l'extérieur, ayant une partie de base et des ailes se terminant par des parties d'extrémité formant crochets pour le montage avec un carter, et des surfaces d'appui tronconiques en contact avec les pattes d'accrochage des aubes sont situées sur les faces externes des ailes de la couronne.

14. Roue fixe selon l'une quelconque des revendications 10 à 13, dans laquelle la plate-forme extérieure de chaque aube présente une nervure faisant saillie du côté extérieur et venant en butée radiale contre une partie de surface de la couronne métallique.

15. Roue fixe selon l'une quelconque des revendications 10 à 14, dans laquelle la couronne métallique est en une seule pièce et présente une fenêtre d'insertion des aubes.

## Patentansprüche

1. Leitrad einer Turbomaschine, umfassend:
- eine Vielzahl von Schaufeln (12), die jeweils eine innere Plattform (14), eine äußere Plattform (16), welche auf der Außenseite Festhaklaschen (162, 164) aufweist, und wenigstens ein Blatt (18), das sich zwischen der inneren und der äußeren Plattform erstreckt, umfassen,
- einen metallischen Montagekranz (20), an dem die Festhaklaschen der Schaufeln angreifen, wobei der Metallkranz alle Schaufeln trägt, sich entlang der äußeren Plattformen von mehreren benachbarten Schaufeln durchgehend erstreckt und ein getrenntes Montageteil zwischen den Schaufeln und einem Gehäuse (40) bildet,
**dadurch gekennzeichnet, dass** die Schaufel und die Plattform mit den Festhaklaschen ein einziges Teil aus Keramikmatrix-Verbundwerkstoff bilden.

2. Leitrad nach Anspruch 1, bei dem der Metallkranz (20) durch ein Blech gebildet ist.

3. Leitrad nach Anspruch 1 oder Anspruch 2, bei dem der Metallkranz (20) kegelstumpfförmige Anlageflächen (222b, 242b) aufweist, die zum radialen und axialen Halt der Schaufeln beitragen.

4. Leitrad nach einem der Ansprüche 1 bis 3, bei dem der Metallkranz (20) einen im Wesentlichen Ω-förmigen, sich nach außen öffnenden Querschnitt aufweist, der einen Basisteil (26) und Flügel (22, 24), welche durch Haken (224, 244) für die Montage mit einem Gehäuse bildende Endteile auslaufen, aufweist, und kegelstumpfförmige Anlageflächen in Kontakt mit den Festhaklaschen der Schaufeln auf den Außenseiten der Flügel des Kranzes gelegen sind.

5. Leitrad nach einem der Ansprüche 1 bis 4, bei dem die äußere Plattform einer jeden Schaufel eine Rippe (166), die auf der Außenseite vorspringt und an einem Oberflächenteil des Metallkranzes in radialen Anschlag gelangt, aufweist.

6. Leitrad nach einem der Ansprüche 1 bis 5, bei dem der Metallkranz aus einem einzigen Stück besteht und eine Aussparung (21) zum Einsetzen der Schaufeln aufweist.

7. Leitrad nach Anspruch 6, ferner umfassend wenigstens einen Riegel zum Festlegen (26_{1,2}) einer im Bereich der Einsetzaussparung montierten Schaufel in Position.

8. Leitrad nach einem der Ansprüche 1 bis 7, bei dem Dichtungsplatten (170) an den Außenseiten der äußeren Plattformen der Schaufeln angeordnet sind, wobei jede Platte eine Verbindung zwischen den äußeren Plattformen von zwei benachbarten Schaufeln wenigstens teilweise bedeckt.

9. Turbine einer Turbomaschine, die wenigstens ein ein Turbinenleitrad bildendes Leitrad nach einem der Ansprüche 1 bis 8 umfasst, wobei die Turbine ein Laufrad aufweist, das dem Leitrad benachbart ist und Schaufeln umfasst, die an ihren Enden mit Zungen, welche einem durch einen Ring getragenen Abriebmaterial gegenüberliegen, versehen sind, wobei ein zusätzlicher Metallkranz zwischen dem Abriebmaterial-Tragring und den äußeren Plattformen der Schaufeln des Leitrades, in Anlage an diesen angebracht ist.

10. Verdichter einer Turbomaschine, umfassend wenigstens ein Leitrad, das ein Verdichterleitrad bildet und umfasst:
- eine Vielzahl von Schaufeln, die jeweils eine innere Plattform, eine äußere Plattform, welche auf der Außenseite Festhaklaschen aufweist, und wenigstens ein Blatt, das sich zwischen der inneren und der äußeren Plattform erstreckt, umfassen, und
- einen metallischen Montagekranz, an dem die Festhaklaschen der Schaufeln angreifen, wobei der Metallkranz alle Schaufeln trägt, sich entlang der äußeren Plattformen von mehreren benachbarten Schaufeln durchgehend erstreckt und ein getrenntes Montageteil zwischen den Schaufeln und einem Gehäuse bildet,
wobei der Verdichter ein Laufrad aufweist, das dem Leitrad benachbart ist und Schaufeln umfasst, die an ihren Enden mit Zungen, welche einem durch einen Ring getragenen Abriebmaterial gegenüberliegen, versehen sind, wobei ein zusätzlicher Metallkranz zwischen dem Abriebmaterial-Tragring und den äußeren Plattformen der Schaufeln des Leitrades, in Anlage an diesen angebracht ist,
**dadurch gekennzeichnet, dass** die Schaufel und die äußere Plattform mit den Festhaklaschen ein einziges Teil aus Verbundwerkstoff mit keramischer oder organischer Matrix bilden.

11. Leitrad nach Anspruch 10, bei dem der Metallkranz durch ein Blech gebildet ist.

12. Leitrad nach Anspruch 10 oder Anspruch 11, bei dem der Metallkranz kegelstumpfförmige Anlageflächen aufweist, die zum radialen und axialen Halt der Schaufeln beitragen.

13. Leitrad nach einem der Ansprüche 10 bis 12, bei dem der Metallkranz einen im Wesentlichen Ω-förmigen, sich nach außen öffnenden Querschnitt aufweist, der einen Basisteil und Flügel, welche durch Haken für die Montage mit einem Gehäuse bildende Endteile auslaufen, aufweist, und kegelstumpfförmige Anlageflächen in Kontakt mit den Festhaklaschen der Schaufeln auf den Außenseiten der Flügel des Kranzes gelegen sind.

14. Leitrad nach einem der Ansprüche 10 bis 13, bei dem die äußere Plattform einer jeden Schaufel eine Rippe, die auf der Außenseite vorspringt und an einem Oberflächenteil des Metallkranzes in radialen Anschlag gelangt, aufweist.

15. Leitrad nach einem der Ansprüche 10 bis 14, bei dem der Metallkranz aus einem einzigen Stück besteht und eine Aussparung zum Einsetzen der Schaufeln aufweist.

## Claims

1. A turbine engine stator wheel comprising:
• a plurality of vanes (12) each comprising an inner platform (14), an outer platform (16) presenting attachment tabs (162, 142) on the outside, and at least one airfoil (12) extending between the inner and outer platforms, and
• a metal assembly ring (20) in which the attachment tabs of the vanes are engaged, the metal ring supporting all of the vanes, extending continuously along the outer platforms of a plurality of adjacent vanes, and forming a distinct assembly part between the vanes and a casing (40), **characterized in that** the vane and the outer platform together with the attachment tab forms a single piece of composite material.

2. A stator wheel according to claim 1, wherein the metal ring (20) is made of sheet metal.

3. A stator wheel according to claim 1 or claim 2, wherein the metal ring (20) presents frustoconical bearing surfaces (162b, 164b) contributing to holding the vanes radially and axially.

4. A stator wheel according to any one of claims 1 to 3, wherein the metal ring (20) has a section that is substantially Ω-shaped and outwardly open, having a web portion (26) and flanges (22, 24) terminating in end portions forming hooks (224, 244) for attaching to a casing, and frustoconical bearing surfaces in contact with the attachment tabs of the vanes are situated on the outside faces of the flanges of the ring.

5. A stator wheel according to any one of claims 1 to 4 wherein the outer platform of each vane presents a rib (166) projecting towards and coming into radial abutment against a surface portion of the metal ring.

6. A stator wheel according to any one of claims 1 to 5, wherein the metal ring (20) comprises a single piece and presents a vane insertion window (21).

7. A stator wheel according to claim 6, further including at least one latch (26) for blocking in position a vane mounted via the insertion window.

8. A stator wheel according to any one of claims 1 to 7, wherein sealing wafers (170) are arranged on the outer faces of the outer platforms of the vanes, each wafer covering at least part of a junction between the outer platforms of two adjacent vanes.

9. A turbine engine turbine including at least one stator wheel forming a turbine nozzle according to any one of claims 1 to 8, wherein the composite material is a ceramic matrix composite material.

10. A turbine engine compressor including at least one stator wheel forming a compressor diffuser, and comprising:
• a plurality of vanes each comprising an inner platform, an outer platform presenting attachment tabs on the outside, and at least one airfoil extending between the inner and outer platforms, and
• a metal assembly ring in which the attachment tabs of the vanes are engaged, the metal ring supporting all of the vanes, extending continuously along the outer platforms of a plurality of adjacent vanes, and forming a distinct assembly part between the vanes and a casing, **characterized in that** the vane and the outer platform together with the attachment tab forms a single piece of composite material, wherein the composite material is a composite material having a matrix that is ceramic or organic.

11. Stator wheel according to claim 10, wherein the metal assembly ring is made of sheet metal.

12. Stator wheel according to claim 10 or 11, wherein the metal assembly ring presents frustoconical bearing surfaces contributing to holding the vanes radially and axially.

13. Stator wheel according to any of claims 10 to 12, wherein the metal assembly ring has a section that is substantially Ω-shaped and outwardly open, having a web portion and flanges terminating in end portions forming hooks for attaching to a casing, and frustoconical bearing surfaces in contact with the attachment tabs of the vanes are situated on the outside faces of the flanges of the ring.

14. Stator wheel according to any of claims 10 to 13, wherein the outer platform of each vane presents a rib projecting towards and coming into radial abutment against a surface portion of the metal ring.

15. Stator wheel according to any of claims 10 to 14, the metal assembly ring comprises a single piece and presents a vane insertion window.
